# EUROPEAN PATENT APPLICATION

(11) **EP 1 103 567 A1**
(43) Date of publication of application: **30.05.2001**
(21) Application number: 00309683.1
(22) Date of filing: 02.11.2000
(51) Int. Cl.: C08F 36/04, C08F 2/34, C08F 4/70, C08F 4/64

(54) **Process for increasing molecular weight of polybutadiene or polyisoprene produced in a gas phase polymerization using a polymerization catalyst**

(30) Priority: 23.11.1999 US 448846
(71) Applicant: UNION CARBIDE CHEMICALS & PLASTICS TECHNOLOGY CORPORATION, Danbury, Connecticut 06817-0001 (US)
(72) Inventor: Cann, Kevin Joseph, Rocky Hill, New Jersey 08555 (US); Zhang, Minghui, Edison, New Jersey 08817 (US)
(74) Representative: Hayes, Adrian Chetwynd

(57) **Abstract**

There is provided a method for increasing the molecular weight of high cis-1,4,-polybutadiene and/or polyisoprene as it is polymerized in a gas phase process from 1,3-butadiene or isoprene in the presence of a nickel, cobalt, or titanium metal containing catalyst, which method comprises introducing a light boiling, high volatility hydrocarbon such as isopentane to said polymerization.

## Description

### Field of the Invention

The present invention relates to the production of polybutadiene in a gas phase process. More particularly, the invention relates to a method for increasing the molecular weight of high cis-1,4-polybutadiene produced in a gas phase reactor from 1,3-butadiene in the presence of a catalyst containing nickel, cobalt, or titanium.

### Background of the Invention

In non-gas phase polymerizations (e.g, solution, emulsion, suspension, bulk, and slurry) of butadiene using nickel catalysts, steps are generally taken to control and lower the molecular weight range. This is because polybutadiene having a very high molecular weight can be obtained from these processes due to the high concentration of the butadiene monomer in the reaction medium.

Only recently has high cis-1,4-polybutadiene been produced in a gas phase polymerization. Initially, the challenge was to produce polybutadiene in more commercially acceptable quantities. But in addition to producing the polymer in acceptable amounts, it is also necessary to produce a polybutadiene having a molecular weight within commercial ranges desired by end-users.

In early gas phase processes to produce polybutadiene and like polymers (see, for example, WO 96/04322 and WO 96/04323), only the monomer partial pressure and reaction temperature were used to control the polymer molecular weight. This was similar to that which was done in the gas phase polymerization of one or more alpha olefins. These parameters alone produced a polydiene of a sufficiently high molecular weight when a rare earth catalyst was employed. However, the use of these parameters alone to control molecular weight in gas phase-produced polydiolefin using a titanium, nickel or cobalt catalyst system resulted in a polymer that was limited to certain molecular weight ranges which were usually too low for the intended commercial end-use. This was due to the constraint of the relative low vapor pressure of the diolefin, e.g.,butadiene or isoprene, and the discovered fact that the molecular weight of the polymer has a tendency to decrease as the reaction temperature is increased in a gas phase process. In general, it is desirable to operate gas phase processes at the higher temperatures to make them overall more cost efficient and commercially feasible.

Calderon et al. in U.S. Patent No. 5,652,304 (Col. 4, line 47 to Col. 5, line 27) discloses the use of diarylamines to reduce gel formation and to reduce, not raise, the molecular weight of the rubber being synthesized in a gas phase process using titanium and nickel catalyst systems. At Col. 18, lines 1-59 other molecular weight regulators known to be useful in solution processes are listed as also being useful in such gas phase process. The unsaturated compounds suggested are unsaturated alpha-olefins and certain dienes.

Another method for controlling the molecular weight range of a final polymer produced using butadiene or isoprene in the gas phase has been to pre-activate or pre-polymerize the catalyst itself. In this manner, the molecular weight of high cis-polybutadiene in such a gas phase reaction is increased to more acceptable levels by pre-activating the nickel catalyst used. The so-called "prepoly" solution of an active nickel catalyst mixture can be fed to the reactor as a solution, isolated as a solid, or can be first placed on a suitable support and fed as a solid to the reactor. However, for acceptable catalyst activity, the prepoly mixture should be aged prior to its use in a polymerization reactor. And, further, the prepoly solution has a limited shelf life of only about one month.

Therefore, it is desired to have additional approaches to increase molecular weight in the product in gas phase butadiene polymerizations employing titanium, cobalt and nickel catalyst systems.

### Summary of the Invention

Accordingly, there is provided a method for increasing the molecular weight of high cis-1,4,-polybutadiene or polyisoprene as it is polymerized in a gas phase process from 1,3-butadiene or isoprene, respectively, in the presence of a titanium, cobalt or nickel catalyst system, which method comprises conducting said polymerization in the presence of isopentane light boiling, high volatility hydrocarbon.

In addition to having the capability of producing polybutadiene or polyisoprene having a higher molecular weight, it will also be easier to aim for a specifically targeted molecular weight material and to prevent upsets in the reactor when impurities enter the reaction system and drive molecular weights lower. This in turn can result in higher aim grade product with greater flexibility to control molecular weight.

Still another advantage, is the resulting higher production rates since butadiene or isoprene can be polymerized at higher reaction temperatures to achieve a commercial molecular weight of polybutadiene or polyisoprene when a hydrocarbon compound such as isopentane is used in the polymerization.

The use of a hydrocarbon compound, preferably isopentane, which is inert to the monomers and individual catalyst components also alleviates such concerns as lowering catalyst activity, poisoning of one or more catalyst components, undesirable residue in the product or in purging gases downstream, and the formation of undesirable side-products, especially ones that can act as contaminants in the product or be difficult to purge.

### Detailed Description of the Invention

High Boiling, High Volatility Hydrocarbon Addition. The addition of a hydrocarbon compound to a gas phase polymerization of 1,3-butadiene or isoprene catalyzed using one or more nickel catalysts, and optionally an inert particulate material such as carbon black, results in a polymer of butadiene or isoprene having a higher molecular weight than that would be obtained by polymerizing in the absence of the hydrocarbon compound. Preferably, the hydrocarbon compound is selected from the group consisting of isopentane, neopentane, isobutane, butane, pentane, hexane, 3-methylpentane, 2-methylpentane, and mixtures thereof. Preferred among these are neopentane, pentane, isobutane, and isopentane, with isopentane being the most preferred. Hydrocarbon addition can be used in conjunction with pre-activating or pre-polymerizing the nickel catalyst, as well as along with monomer partial pressure and reaction temperature control.

A hydrocarbon compound can be addded into the reactor in a number of different ways. It can be added along with a preactivated catalyst as part of a prepoly solution. Or, it can be added into the reactor directly before the addition of a catalyst. Alternatively, it can be used to coat the inert particulate material(s) used as the fluidization aid(e.g., carbon black and/or silica) and/or to coat a catalyst support material. Typically, such coating takes place prior to the entry of the inert particulate material into the reactor or to the inert particulate material in the reactor prior to the introduction of the monomer. Also, the hydrocarbon compound can be used as one of the inert gases used to fluidize the solids (i.e., polymer and/or inert particulate material) in the reactor.

The hydrocarbon compound can be fed into the reactor intermittently or continuously with continuous feeding being preferred. Whether introduced into intermittently or continuously, the amount should be controlled such that it is in the range of 0.5 to 10 weight percent of the total monomer weight.

The polymers produced in the presence of isopentane may have a weight-averaged molecular weight (Mw) ranging from 350,000 to 1,000,000, preferably 500,000 to 1,000,000.

Nickel Catalyst. The nickel catalyst employed in the polymerization are organonickel compounds of nickel with mono- or bi-dentate organic ligands containing up to 20 carbon atoms. "Ligand" is defined as an ion or molecule bound to and considered bonded to a metal atom or ion. Mono-dentate means having one position through which covalent or coordinate bonds with the metal may be formed; bi-dentate means having two positions through which covalent or coordinate bonds with the metal may be formed. The organonickel compounds are generally soluble in inert solvents. Thus, any salt of an organic acid containing from about 1 to 20 carbon atoms may be employed. Representative of organonickel compounds are nickel benzoate, nickel acetate, nickel naphthenate, nickel octanoate, nickel neodecanoate, nickel 2-ethylhexanoate, bis(π-allyl nickel), bis(π-cycloocta-1,5-diene)nickel, bis(π-allyl nickel trifluoroacetate), bis(α-furyl dioxime) nickel, nickel palmitate, nickel stearate, nickel acetylacetonate, nickel salicaldehyde, bis(salicyladehyde) ethylene diimine nickel, bis(cyclopentadiene) nickel, cyclopentadienylnickel nitrosyl, and nickel tetracarbonyl. The preferred nickel is a nickel salt of a carboxylic acid or an organic complex compound of nickel. Most preferred nickel components are nickel octanoate and nickel-2-ethylhexanoate.

Co-catalysts that can be employed with the component containing nickel are organoaluminum compounds. Any organoaluminum having the formula: 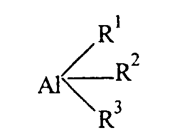 wherein R¹ is selected from the group consisting of alkyl, cycloalkyl, aryl, alkaryl, arylalkyl, alkoxy, hydrogen and fluorine; R² and R³ are the same or different and are selected from the group consisting of alkyl, cycloalkyl, aryl, alkaryl, and arylalkyl. The ratio of Al/Ni may be varied between about 1:1 to 500:1, preferably between about 2:1 to 100:1, and most preferably about 5:1 to 25:1.

Representative of compounds corresponding to the formula are diethyl aluminum fluoride, di-n-propyl aluminum fluoride, di-n-butyl aluminum fluoride, diisobutyl aluminum fluoride, dihexyl aluminum fluoride, dioctyl aluminum fluoride, and diphenyl aluminum fluoride. Also included are diethyl aluminum hydride, di-n-propyl aluminum hydride, di-n-butyl aluminum hydride, diisobutyl aluminum hydride, diphenyl aluminum hydride, di-p-tolyl aluminum hydride, dibenzyl aluminum hydride, phenyl ethyl aluminum hydride, phenyl-n-propyl aluminum hydride, p-tolyl ethyl aluminum hydride, p-tolyl n-propyl aluminum hydride, p-tolyl isopropyl aluminum, benzyl ethyl aluminum hydride, benzyl n-propyl aluminum hydride, and benzyl isopropyl aluminum hydride and other organoaluminum hydrides. Also included are trimethyl aluminum, triethyl aluminum, tri-n-propyl aluminum, triisopropyl aluminum, tri-n-butyl aluminum, triisobutyl aluminum, tripentyl aluminum, trihexyl aluminum, tricyclohexyl aluminum, trioctyl aluminum, triphenyl aluminum, tri-p-tolyl aluminum, tribenzyl aluminum, ethyl diphenyl aluminum, ethyl di-p-tolyl aluminum, ethyl dibenzyl aluminum, diethyl phenyl aluminum, diethyl tolyl aluminum, diethyl benzyl aluminum and other triorganoaluminum compounds. Also included are diethylaluminum ethoxide, diisobutylaluminum ethoxide and dipropylaluminum methoxide, methylaluminoxane, and modified methylaluminoxane. Mixtures of these organoaluminum compounds can also be employed in the invention. Of these organoaluminum compounds triethylaluminum (TEAL), triisobutylaluminum (TIBA), and mixtures of them are preferred.

When MAO or MMAO is employed as the co-catalyst, it may be activated by one of the following: (a) branched or cyclic oligomeric poly(hydrocarbylaluminum oxide)s which contain repeating units of the general formula -(Al(R‴)O)-, where R‴ is hydrogen, an alkyl radical containing from 1 to about 12 carbon atoms, or an aryl radical such as a substituted or unsubstituted phenyl or naphthyl group; (b) ionic salts of the general formula [A⁺][BR*₄-], where A⁺ is a cationic Lewis or Bronsted acid capable of abstracting an alkyl, halogen, or hydrogen from the transition metal component of the catalyst, B is boron, and R* is a substituted aromatic hydrocarbon, preferably a perfluorophenyl radical; and (c) boron alkyls of the general formula BR*₃, where R* is as defined above.

Aluminoxanes are well known in the art and comprise oligomeric linear alkyl aluminoxanes represented by the formula: 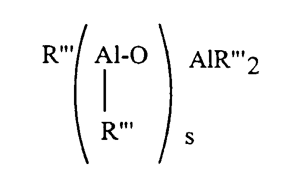 and oligomeric cyclic alkyl aluminoxanes of the formula: 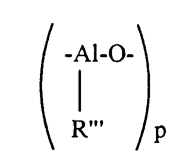 wherein s is 1 to 40, preferably 10 to 20; p is 3 to 40, preferably 3 to 20; and R"' is an alkyl group containing 1 to 12 carbon atoms, preferably methyl or an aryl radical such as a substituted or unsubstituted phenyl or naphthyl radical. Modified methylaluminoxane is formed by substituting 20-80 wt% of the methyl groups with a C₂ to C₁₂ group, preferably with isobutyl groups, using techniques known to those skilled in the art.

Promoters that can be used with the component containing nickel include hydrogen fluoride (HF) and borontrifluoride (BF₃), either in their pure state or as a complex. The ratio of HF:Al or BF₃:Al may be varied between about 0.5:1 to 3.5:1. For HF or its complexes, the HF:Al ratio may be varied between about 0.5:1 to 3.5:1, preferably about 1:1 to 2.5:1, and most preferably 1.5:1 to 2.5:1. For BF₃ and its complexes, the BF₃:Al ratio may be varied between about 0.5:1 to 3:1, preferably about 0.5:1 to 2:1, and most preferably about 0.6:1 to 1.5:1. Representative of these complexes are well known and are disclosed, for example, in U.S. Patent Nos. 4,102,817 and 5,412,045. They are complexes formed between HF or BF₃ and molecule(s) from the following class of organic compounds: ether, alcohol, ketone, nitrile, carboxylic acid, ester, amine, and sulfide.

An ether is a substance that has two organic residues bonded to the same oxygen atom, R―O―R', where R and R' represent alkyl, cycloalkyl, aryl, alkaryl, and arylalkyl containing 1 to about 30 carbon atoms; where R and R' may be the same or different. R and R' may also be joined together through a common carbon bond to form a cyclic ether with the ether oxygen being a part of the cyclic structure such as tetrahydrofuran, furan, and dioxane. Representative but not exhaustive of ethers that may be used in the HF or BF₃ complexes in this invention are dimethyl ether, diethyl ether, dibutyl ether, diamyl ether, diisopropyl ether, diphenyl ether, dibenzyl ether, ethyl methyl ether, tetrahydrofuran, anisole, and the like.

An alcohol is a substance that has a carbon atom attached by a single bond to oxygen which is in turn attached to a hydrogen by a single bond, R―O―H, where R represents alkyl, cycloalkyl, aryl, alkaryl, and arylalkyl containing 1 to about 30 carbon atoms. Representative but not exhaustive of alcohols that may be used in the HF or BF₃ complexes in this invention are methanol, ethanol, n-propanol, isopropanol, benzyl alcohol, cyclohexanol, butanol, phenol, and the like. Preferred among these alcohols is a phenol.

A ketone is a substance that has a carbon atom attached by a double bond to oxygen, 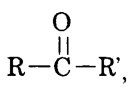 where R and R' represent alkyl, cycloalkyl, aryl, alkaryl, and arylalkyl containing 1 to about 30 carbon atoms; where R and R' may be the same or different. R and R' may also be joined together through a common carbon bond to form a cyclic ketone. Representative but not exhaustive of ketones that may be used in the HF or BF₃ complexes in this invention are acetone, diethyl ketone, methylethyl ketone, 2,4-pentandione, butyl cycloheptanone, benzophenone, phenyltolyl ketone, quinone, and the like.

A nitrile is a substance that has a carbon atom attached to a nitrogen by a triple bond, R―C=N, where R represents alkyl, cycloalkyl, aryl, alkaryl, and arylalkyl containing 1 to about 30 carbon atoms. Representative but not exhaustive of nitriles that may be used in the HF or BF₃ complexes in this invention are acetonitrile, acrylonitrile, benzonitrile, tolylnitrile, phenylacetonitrile, and the like.

A carboxylic acid is a substance that has a carbon atom attached to a oxygen by a double bond and a hydroxyl group by a single bond, 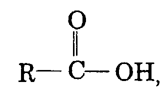 where R represents alkyl, cycloalkyl, aryl, alkaryl, and arylalkyl containing 1 to about 30 carbon atoms. Representative but not exhaustive of carboxylic acids that may be used in the HF or BF₃ complexes in this invention are formic acid, acetic acid, oxalic acid, malonic acid, crotonic acid, benzoic acid, phthalic acid, and like.

An ester is a substance that has a combination of carboxylic acid and alcohol, 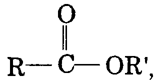 where R and R' represent alkyl, cycloalkyl, aryl, alkaryl, and arylalkyl containing 1 to about 30 carbon atoms; where R and R' may be the same or different. R and R' may also be joined together through a common carbon bond to form a lactone. Representative but not exhaustive of esters that may be used in the HF or BF₃ complexes in this invention are ethyl acetate, ethyl benzoate, phenyl acetate, and like.

An amine is an organic derivative of ammonia with one, two or three hydrogen atoms being replaced by one, two or three organic residues, 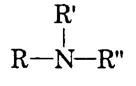 where R, R' and R" represent alkyl, cycloalkyl, aryl, alkaryl, and arylalkyl containing 1 to about 30 carbon atoms; where R, R' and R" may be the same or different. R, R' and R" may also be joined together through a common carbon bond to form a cyclic amine. Representative but not exhaustive of amines that may be used in the HF or BF₃ complexes in this invention are ethylamine, diethylamine, triethylamine, aniline, benzylamine, diphenylamine, diethylphenylamine and like.

A sulfide is a substance that has two organic residues bonded to the same sulfur atom, R―S―R', where R and R' represent alkyl, cycloalkyl, aryl, alkaryl, and arylalkyl containing 1 to about 30 carbon atoms; where R and R' may be the same or different. R and R' may also be joined together through a common carbon bond to form a cyclic sulfide with the sulfur being a part of the cyclic structure such as tetrahydrothiophene and thiophene. Representative but not exhaustive of sulfides that may be used in the HF or BF₃ complexes in this invention are dimethyl sulfide, diethyl sulfide, dibutyl sulfide, diamyl sulfide, diisopropyl sulfide, diphenyl sulfide, dibenzyl sulfide, ethyl methyl sulfide, tetrahydrothiophene, and thiophene.

In the process of the invention, the individual catalyst components of the nickel catalyst system can be combined in any order. However, in commercial-like gas phase reactions it is preferred to conduct some type of catalyst pre-activation to obtain adequate catalyst activity in gas phase butadiene and isoprene polymerization reactions using nickel catalysts.

Preferably, nickel catalysts for diene polymerization reactions of the present invention employ a pre-activated catalyst system comprising a reaction mixture of (i) an organonickel compound; (ii) an organoaluminum; and (iii) at least one BF₃ or HF complex, wherein components (i), (ii) and (iii) are mixed together while in the presence of a small amount of at least one conjugated diolefin (iv). Optionally, water (v) is included. When water (v) is employed it is preferably added as the last ingredient to the combination of components (i)-(iiii) or components (i)-(iv). The amount of water used is calculated base upon the amount of aluminum employed. The molar ratio of water to aluminum varies from about 0.1: to about 1:1, preferably from abut 0.1:1 to about 0.5:1.

Components (i), (ii), and (iii) can be mixed together in any order while in the presence of a small amount of a conjugated diolefin (iv). The diolefin (iv) can be the same or different from the diene(s) or vinyl compound to be polymerized. Preferably, the diolefin (iv) is the same as at least one of the dienes to be polymerized. That is, the diolefin (iv) is selected preferably from the group consisting of butadiene, isoprene, and styrene. Most preferably the diolefin is butadiene (usually 1,3-butadiene) or isoprene, and not a mixture of the two. Other diolefins which can be used include polybutadiene, polyisoprene, 1,3-cycloooctadiene, polystyrene, and styrene-butadiene copolymer (SBR).

While the order of addition of the components may be varied, it is advantageous to have the diolefin present when the nickel component contacts the alkyl aluminum component. Therefore, in the present invention, the diolefin (e.g., 1,3-butadiene) is either dissolved in at least one inert hydrocarbon or aromatic solvent or used in bulk as a solvent itself. Suitable solvents are well known and can include, for example, hexane, isopentane, heptane, and toluene. Generally, when the diolefin is used as the solvent an additional solvent is not required.

After the diolefin is dissolved, the most preferred order of addition is organoaluminum and organonickel components followed by the addition of the promoter (BF₃ and/or HF complex). Water is added last. If desired, the organoaluminum and organonickel compounds may be mixed together before they are added to the dissolved diolefin. Ambient temperature and pressure can be employed, since there is no advantage gained by using higher temperatures and pressures.

The amount of diolefin used, expressed as a mole ratio of conjugated diolefin to nickel, for pre-activating can be within the range of about 1:1 to about 1,000:1. Preferred mole ratio of conjugated diolefin to nickel is about 5:1 to about 300:1. It is most preferred to use about 10:1 to about 150:1.

The pre-activated, four- or five- component nickel catalyst has activity over a wide range of catalyst concentrations and catalyst ratios. The four or five components inter-react to form an active catalyst.

After a sufficient contact time the active catalyst mixture (to be called prepoly solution) is ready to be fed to a polymerization reactor. For maximum catalyst activity the total mixture should be aged for at least one hour prior to use in the polymerization reactor. The prepoly solution has a shelf life of about a month. The prepoly solution of active catalyst mixture can be fed to the reactor as a solution, isolated as a solid, or can be first placed on a suitable support and fed as a solid to the reactor. When fed to a gas phase reactor as a solution, the prepoly nickel solution is introduced to the reactor in accordance with procedures set forth in U.S. Patent Nos. 5,317,036 to Brady et al., 5,616,661 to Eisinger et al., and/or U. S. Ser. No. 08/659,764. When the active catalyst or active prepoly nickel solution is fed to the reactor, it has been found that passivation of the reactor with co-catalyst (organoaluminum compound(s)) is not required and that there is no need for a separate co-catalyst (organoaluminum compound) feed to the reactor during polymerization. That is, additional feed of the co-catalyst component or organoaluminum did not result in any additional appreciable catalyst activity.

Cobalt Catalyst. The cobalt compound employable as a catalyst in the invention can be any organic compound such as the cobalt salts of organic acids, cobalt complexes, and the like. Preferably, the cobalt compound is selected from the group consisting of cobalt β-ketone complexes, for example, cobalt(II)acetyacetonate and cobalt(III)acetylacetonate; cobalt β-ketoacid ester complexes, for example, cobalt acetylacetonate ethylester complexes; cobalt salts of organic carboxylic acids having 6 or more carbon atoms, for example, cobalt octoate, cobalt naphthenate, and cobalt benzoate; and cobalt halide complexes, for example, cobalt chloride-pyridine complexes; cobalt chloride-ethyl alcohol complexes and cobalt complexes coordinated with butadiene, for example, (1,3-butadiene)[1-(2-methyl-3-butenyl)-π-allyl]-cobalt which may be prepared, for example, by mixing a cobalt compound with an organic aluminum compound, organic lithium compound or alkyl magnesium compound and 1,3-butadiene. Other typical cobalt compounds are cobalt sorbate, cobalt adipate, cobalt-2-ethylhexoate, cobalt stearate, and the like compounds wherein the organic portion of the molecule contains about 5 to 20, preferably 8-18 carbon atoms and one or two carboxylic functions, as well as acetylacetonate.

Cocatalysts that can be employed with the component containing cobalt include ethylaluminum sesquichloride (EASC), ethylaluminum dichloride (EADC), DEACO, MAO, and mixtures thereof.

Water in small amounts can be used as a promoter with the metal component containing cobalt, if desired.

Titanium Catalyst. A preformed titanium catalyst system is prepared by reacting titanium tetrachloride with an organoaluminum compound. The organoaluminum compound is preferably complexedwith an ether.

The organoaluminum compound that can be utilized has the structural formula: 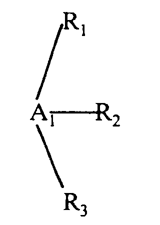 in which R₁ is selected from the group consisting of alkyl groups (including cycloalkyl), aryl groups, alkaryl groups, arylalkyl groups and hydrogen; R₂ and R₃ being selected from the group consisting of alkyl groups (including cycloalkyl), aryl groups, alkaryl groups and arylalkyl groups. Some representative examples of organoaluminum compounds that can be utilized are diethyl aluminum hydride, di-n-propyl aluminum hydride, di-n-butyl aluminum hydride, diisobutyl aluminum hydride, diphenyl aluminum hydride, di-p-tolyl aluminum hydride, dibenzyl aluminum hydride, phenyl ethyl aluminum hydride, phenyl-n-propyl aluminum hydride, p-tolyl ethyl aluminum hydride, p-tolyl n-propyl aluminum hydride, p-tolyl isopropyl aluminum hydride, benzyl ethyl aluminum hydride, benzyl n-propyl aluminum hydride and benzyl isopropyl aluminum hydride, trimethyl aluminum, triethyl aluminum, tri-n-propyl aluminum, triisopropyl aluminum, tri-n-butyl aluminum, triisobutyl aluminum, tripentyl aluminum, trihexyl aluminum, tricyclohexyl aluminum, trioctyl aluminum, triphenyl aluminum, tri-p-tolyl aluminum, tribenzyl aluminum, ethyl diphenyl aluminum, ethyl di-p-tolyl aluminum, ethyl dibenzyl aluminum, diethyl phenyl aluminum, diethyl p-tolyl aluminum, diethyl benzyl aluminum and other triorganoaluminum compounds. The preferred organoaluminum compounds include triethyl aluminum (TEAL), tri-n-propyl aluminum, triisobutyl aluminum (TIBAL), trihexyl aluminum and diisobutyl aluminum hydride (DIBAH).

The titanium catalyst system utilized must be preformed. Since it is preformed, the titanium catalyst system will maintain a high level of activity over a long period of time. The utilization of such a preformed catalyst system also results in the formation of a uniform polymeric product. Such preformed titanium catalyst systems are prepared in the presence of one or more ethers.

The preformed titanium catalyst can be made by a batch process. In such a batch process, the catalyst components are added sequentially to a reaction vessel. The titanium tetrachloride component is generally added to the reaction vessel first in the form of an organic solution. The aluminum component and the ether are then added to the reaction vessel to create the preformed titanium catalyst which is in the form of a slurry. The preformed titanium catalyst system can also be made by a continuous process as described in Australian Patent 582,273. The teachings of Australian Patent 582,273 are incorporated herein by reference.

In preparing the preformed catalyst system, the titanium tetrachloride and a mixture of the aluminum compound and an ether are mixed together. The titanium tetrachloride can be added as a solution of titanium tetrachloride in an inert organic solvent or it can be added neat (without being diluted in an inert organic solvent).

The term "an inert organic solvent" as used herein refers to an organic solvent which is chemically inert to all of the catalyst components utilized in the process. In other words, the inert organic solvent will not react with the titanium tetrachloride, the trialkylaluminum compound or the ether compound. Some representative examples of inert organic solvents include aromatic hydrocarbons, aliphatic hydrocarbons, alicyclic hydrocarbons and mixtures of two or more of the above-mentioned solvents. Suitable aromatic hydrocarbons for use as the inert organic solvent include benzene, toluene, xylenes, ethylbenzene, diethylbenzene, isobutylbenzene and the like. Some representative examples of suitable aliphatic hydrocarbons include n-pentane, n-hexane, isohexanes, n-heptane, n-octane, isooctanes, n-decane, 2.2-dimethylbutane, petroleum ether, kerosene, petroleum spirits, petroleum naptha and the like. Cyclohexane and methylcyclohexane are representative of alicyclic hydrocarbons that can be utilized as the inert organic solvent.

Titanium catalysts are extremely sensitive to contaminants such as oxygen, oxygen containing compounds and sulfur containing compounds and very small quantities of such contaminants can impair the activity of the catalyst. Because of this sensitivity, contaminants such as water, alcohols, aldehydes, oxides of carbon, carbonyl compounds, hydrogen sulfide, mercaptans and the like should not be present in the inert organic solvent in significant quantities. Oxygen, which is dissolved in the inert organic solvent, should be removed before the preparation of the solution of titanium tetrachloride or the solution of the trialkylaluminum compound and the ether. This can be accomplished by sparging the inert organic solvent with a noble gas or nitrogen.

The ethers that are used in the present invention generally contain from 2 to 40 carbon atoms and preferably contain from 4 to 20 carbon atoms. Some representative examples of such ethers include diethyl ether, dipropyl ether, diphenyl ether, methyl phenyl ether and the like. Diethyl ether is a good choice for use in conjunction with triethylaluminum and diphenyl ether is a good choice for use in conjunction with triisobutyl aluminum.

Titanium tetrachloride can be utilized as a solution or neat. Solutions of titanium tetrachloride can be prepared by simply mixing the titanium tetrachloride into an inert organic solvent so as to produce a homogeneous solution containing at least 3 weight percent titanium tetrachloride. In most cases, such solutions of titanium tetrachloride will contain from 3 to 25 weight percent titanium tetrachloride, based upon the total weight of the solution. The mixture of the trialkylaluminum compound and the ether can be utilized as a solution or neat. The ratio of the ether to the trialkylaluminum compound will generally be from 0.4:1.0 to 1.2:1.0 with a ratio of 0.5:1.0 to 1.0:1.0 being preferred. Such solutions of the trialkylaluminum compound and the ether can be prepared by mixing from at least 3 weight percent of the trialkylaluminum compound and at least 1.5 weight percent of the ether into an inert organic solvent so as to produce a homogeneous solution. In most cases, the mixture of the trialkylaluminum compound and the ether will contain from 3 to 25 weight percent of the trialkylaluminum compound and from 1.5 to 13 weight percent of the ether. Both of these compounds can be added neat if a sufficient amount of an inert organic solvent is separately added to produce a solution containing 1 to 13 weight percent titanium tetrachloride, 1 to 13 weight percent trialkylaluminum compound and 0.7 to 8 weight percent of the ether.

The titanium tetrachloride and the mixture of the trialkylaluminum compound and the ether are added in amounts so that the mole ratio of the trialkylaluminum compound to titanium tetrachloride is between about 0.7:1.0 to 1.2:1.0. Preferably, the mole ratio of the trialkylaluminum compound to titanium tetrachloride will be between 0.8:1 and 1.1:1. With the most preferred mole ratio of the trialkylaluminum compound to titanium tetrachloride being between 0.85:1.0 and 0.95:1.0. The titanium tetrachloride and the solution of the trialkylaluminum compound and the ether are thoroughly mixed by applying some form of vigorous agitation. Normally, the agitation will be provided by rotating blades in the reaction zone.

The catalyst components are mixed and maintained at a temperature of from -20° C to 60° C. It is generally preferred for the catalyst system to be preformed at a temperature of from -5° C to 50° C.

The catalyst slurry formed is allowed to age for from 0.5 hours to 200 hours to form a preformed catalyst composition. It is normally preferred to age the preformed catalyst system for about 1 hour to about 24 hours. It is most preferred to age the catalyst system for 2 hours to 6 hours.

The preformed titanium catalyst system is recovered from the slurry of preformed catalyst before it is employed in carrying out the vapor phase polymerizations of this invention. This can be accomplished by simply allowing the solvent in the preformed catalyst system to evaporate so as to yield a powder of the preformed titanium catalyst system. The process can be facilitated by utilizing an elevated temperature and/or vacuum. It can also be facilitated by passing an inert gas through the catalyst suspension. In batch processes, the preformed catalyst solution can be charged into the reaction zone (reactor) with the solvent being removed before monomer introduction. In such a case, the dry catalyst system will normally adhere to the reactor walls. Optionally, the solvent in the preformed catalyst solution can be removed outside of the reaction zone to form a powder which can be continuously charged into the reaction zone in continuous processes.

It is normally preferred for the preformed titanium catalyst system to be supported. The support can be any solid material which is inert and which will not adversely affect the properties of the cis-1.4-polyisoprene rubber. Carbon black and silica are examples of materials which are highly preferred as supports. This is because carbon black and silica are commonly used as fillers in rubber compounds and their presence in the rubber being synthesized would not normally be deemed to be detrimental. In fact, the utilization of cis-1.4-polyisoprene rubber which already contains carbon black and/or silica would be deemed advantageous in many applications.

In the most preferred embodiment the titanium compound (titanates) can be TiCl4, TiBr4, TiI4 or Ti(OR)4 wherein R is an alkyl radical; the co-catalysts are TEAL, TIBA, dialkyl aluminum iodide, and MAO.

Promoters that can be used with the component containing titanium include iodine and organic etherates. For isoprene, the combination of TiCl4, TIBA, and DPE (diphenyl ether) is employed.

Polymerization Process and Conditions. The invention can be used for the gas phase polymerization of polybutadiene. Gas phase processes employable in the present invention can include so-called "conventional" gas phase processes, "condensed-mode," and, most recent, "liquid-mode" processes. In these processes, it is desirable to include a scavenger in the reactor to remove adventitious poisons such as water or oxygen before they can lower catalyst activity.

Conventional fluidized processes are disclosed, for example, in U.S. Patent Nos. 3,922,322; 4,035,560; 4,994,534, and 5,317,036.

Condensed mode polymerizations, including induced condensed mode, are taught, for example, in U.S. Patent Nos. 4,543,399; 4,588,790; 4,994,534; 5,317,036; 5,352,749; and 5,462,999.

Liquid mode or liquid monomer polymerization mode is described in U.S. Patent No. 5,453,471; and WO 96/04323 (PCT/US95/09826). For diolefin (e.g., butadiene) polymerization of the invention, it is preferable to use liquid mode and to employ an inert particulate material, a so-called fluidization aid or flow aid.

Inert particulate materials are described, for example, in U.S. Patent No. 4,994,534 and include carbon black, silica, clay, talc, and mixtures thereof. Organic polymeric materials (e.g., polymers and copolymers of an alpha olefin and polystyrene, in granular or powder form), activated carbon, and modified or treated carbon blacks can also be employed as fluidization aids. Of these, carbon black, silica, and mixtures of them are preferred. When employed as fluidization aids, these inert particulate materials (carbon black, silica, clay, or talc) are used in amounts ranging from about 0.3 to about 80% by weight, preferably about 5 to 60%, most preferably 10 to 45%, based on the weight of the polymer produced. Organic polymeric materials are employed in amounts ranging from 0.3 to 50%, preferably 0.3 to 10% by weight based upon the weight of the final polymer produced. Other inert particulate materials (especially carbon blacks) that can be employed are disclosed in U.S. Patent Nos. 5,162,463 and 5,200,477. WO 98/34960; U.S. Serial Nos. 09/342,706 (D-17851) and 09/343,169 (D-17945).

The fluidization aid can be introduced into the reactor at or near the top of the reactor, at the bottom of the reactor, or to the recycle line directed into the bottom of the reactor. Preferably, the fluidization aid is introduced at or near the top of the reactor or above the fluidized bed. It is preferred to treat (i.e., dry) the fluidization aid prior to entry into the reactor to remove traces of moisture and oxygen. The fluidization aid can be added separately or combined with all or a portion of a monomer, such as butadiene, or with one or more of the catalyst components.

Preferably, the fluidization aid is added separately. The use of inert particulate materials as fluidization aids in polymer polymerization produces a polymer having a core-shell configuration such as that disclosed in U.S. Patent No. 5,304,588. The polybutadiene polymer produced with one or more of these fluidization aids produces a resin particle comprising an outer shell having a mixture of a polymer and an inert particulate material, wherein the inert particulate material is present in the outer shell in an amount higher than 75% by weight based on the weight of the outer shell; and an inner core having a mixture of inert particulate material and polymer, wherein the polymer is present in the inner core in an amount higher than 90% by weight based on the weight of the inner core. These polymers can have residues of the metal(s) comprising the catalyst used to produce them such as small amount of nickel, cobalt, titanium, and/or aluminum. These polymer particles are granular and free-flowing upon exiting the reactor and are produced by a fluidized bed polymerization process at or above the softening point of the sticky polymer.

The polymerizations can be carried out in a single reactor or multiple reactors, typically two or more in series, can also be employed. The essential parts of the reactor are the vessel, the bed, the gas distribution plate, inlet and outlet piping, at least one compressor, at least one cycle gas cooler, and a product discharge system. In the vessel, above the bed, there is a velocity reduction zone, and in the bed a reaction zone.

Generally, all of the above modes of polymerizing are carried out in a gas phase fluidized bed containing a "seed bed" of polymer which is the same or different from the polymer being produced. Preferably, the bed is made up of the same granular polymer that is to be produced in the reactor.

The bed is fluidized using a fluidizing gas comprising the monomer or monomers being polymerized, initial feed, make-up feed, cycle (recycle) gas, inert carrier gas (e.g., nitrogen, argon, or inert hydrocarbon such as ethane, propane, isopentane) and, if desired, modifiers (e.g., hydrogen). Thus, during the course of a polymerization, the bed comprises formed polymer particles, growing polymer particles, catalyst particles, and optional flow aids (fluidization aids) fluidized by polymerizing and modifying gaseous components introduced at a flow rate or velocity sufficient to cause the particles to separate and act as a fluid.

In general, the polymerization conditions in the gas phase reactor are such that the temperature can range from sub-atmospheric to super-atmospheric, but is typically from about 0 to 120°C, preferably about 40 to 100°C, and most preferably about 40 to 80°C. Partial pressure will vary depending upon the temperature of the polymerization, and it can range from about 1 to 300 psi (6.89 to 2,0067 kiloPascals), preferably 1 to 100 psi (6.89 to 689 kiloPascals). The condensation temperature of butadiene is well known. In general, it is preferred to operate at a temperature slightly above to slightly below (that is, for example, ± 10°C for low boiling butadiene and/or isoprene) the dew point temperature.

All references cited herein are incorporated by reference.

Whereas the scope of the invention is set forth in the appended claims, the following examples illustrate certain aspects of the present invention. The examples are set forth for illustration and are not to be construed as limitations on the invention except as set forth in the claims. All parts and percentages throughout the specification are by weight unless otherwise specified.

### EXAMPLES

**I. Nickel Catalyst Preparation Procedure.** The following catalyst preparation procedure was typical of that used in the examples below. The catalysts, co-catalysts and fluoride complexes were used as purchased.

Preparation of Ni-HF Catalyst. To a nitrogen dried 30 mL flask equipped with a stir bar is added 11.2 mL of dry degassed hexane and 3.6 mL of 0.87 M tri-isobutyl aluminimum in hexane (3.1 mmol). The mixture was chilled to 0°C and then 1.0 gram of butadiene was added. To the chilled solution was added 6 mL of 0.026 M nickel octoate (0.15 mmol) pre-dissolved in toluene. After stirring this mixture for 20 minutes, 4.2 mL of 1.5 M HF dibutyl etherate (6.3 mmol) was slowly added. The catalyst solution was directly added to polymerization reactor.

Preparation of Ni-BF₃ Catalyst. In a nitrogen dried 50 mL flask equipped with a stir bar was weighed 0.16 g of nickel naphthenate (60% in toluene) (0.2 mmol), followed by the addition of 20 mL of dry degassed hexane. Under nitrogen, 2.4 g of butadiene (4.4 mmol) gas was added into the solution. A water bath was used to keep the solution at the ambient temperature. Under stirring, 1.3 mL of 1.56 M triethyl aluminum in hexane (2.0 mmol) was added. After stirring the mixture for 20 minutes, 0.4 mL of BF₃·(ether)₂ (2.0 mmol) was added dropwise. After stirring the mixture for 3 hours, 0.72 mg (0.04 mmol) of degassed distilled water was added. The catalyst solution was directly added to polymerization reactor.

**II. 1,3-Butadiene Polymerization Procedure.** The polymerization of 1,3-butadiene was carried out in gas phase according to the following procedure: A one liter stirred autoclave was charged with 32 gram of dry carbon black N-650 used as flow aid. The reactor was dried with a flow purge of N₂ at 90-100°C. The internal reactor temperature was adjusted to the preferred reaction temperature. The reactor was pressure purged with butadiene and then pressurized with 22 psig of monomer. Catalyst solution was added into the reactor to initiate polymerization. A typical catalyst charge was between 0.025 and 0.1 mmol of nickel. The monomer was continuously fed to maintain the initial reactor pressure during the reaction time. The reaction was terminated by injection of a stabilizer package dissolved in alcohol. Conditions and results were as set forth in Table 1. The weight of the polymer and flow aid was obtained and the polymer yield determined by subtracting the amount of residual flow aid present as measured by ash content. The polymer microstructure was measured via infrared analysis and polymer molecular weight is measured via both reduced viscosity and GPC analysis.

Examples 1 through 4 compare the effect of varying the order of isopentane addition in nickel-TIBA-hydrogen fluoride etherate catalyst system. The results are set forth in Table 1. Example 1 (comparative) was run without isopentane.

In Example 2, 10mL of prepoly, prepared according to the general procedure (total nickel species concentration 0.007 M), was mixed with 10 mL of neat isopentane. An aliquot of the solution containing 0.05 mmol of Ni was added into a reactor to initiate the polymerization followed the general procedure. A polymer with higher MW was obtained in this experiment compared to that obtained in reference Example 1.

In Example 3, 7.1 mL of prepoly, prepared according to the general procedure (total nickel species concentration 0.007 M) was used. However, 10 mL of neat isopentane was injected into the reactor prior to the addition of catalyst. A polymer with higher MW was obtained in this experiment compared to that obtained in comparative Example 1.

Comparative Example 4 was a standard run except that after polymerization was terminated, 3 aliquots of 7.2 mL, 2 mL, and 10 mL of isopentane were added into the reactor. Example 4 produced polymer with lower MW, indicating that this isopentane effect was a catalysis related phenomenon, not a post reaction result.

Examples 5 and 6 showed that the isopentane effect operated in the nickel-TEAL-boron trifluoride etherate catalyst system. Example 5 (comparative) was run without isopentane. Example 6 was run similar to Example 3 with a different catalyst promoter (BF₃). A polymer with higher MW based on higher RV values was obtained in this experiment compared to that obtained in reference Example 5.

Example 7 is run under the same conditions as Example 6, except that the catalyst system employed consists of cobalt-2-ethylhexoate (0.05 mmoles) and DEACO, (partially hydrolzed ethylaluminum chloride, 0.25 H₂O/DEAC), (2.0 mmoles). The catalyst components are added separately to the reactor.

Example 8 is run under the same conditions as Example 6, except that isoprene (10 psi) is the monomer and the catalyst system employed is a preformed catalyst consisting of a mixture TiCl4(0.1 mmole), TIBA (0.1 mmole) and diphenyl ether (0.1 mmole).

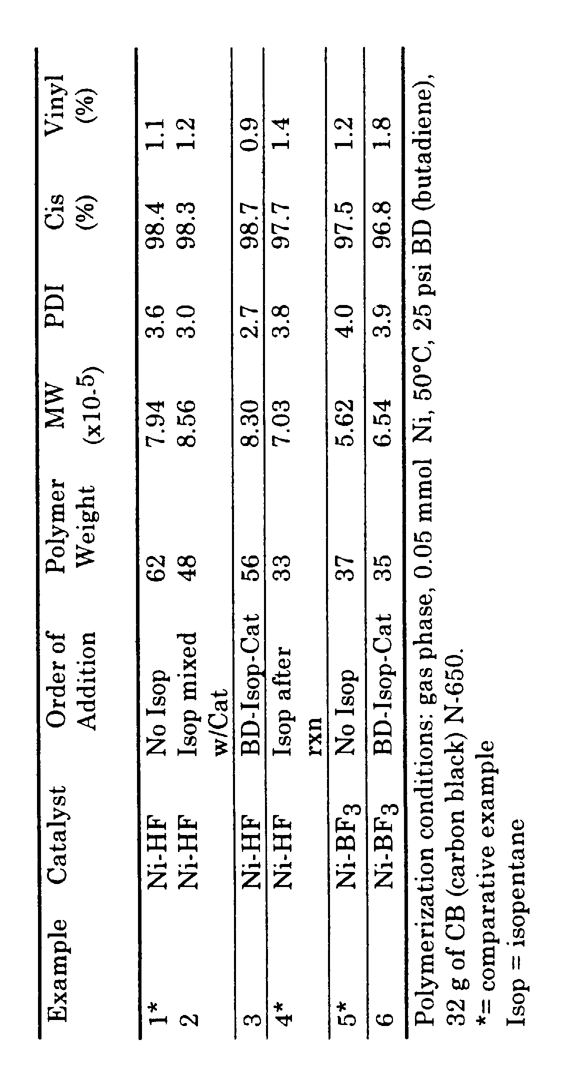

## Claims

1. A process for increasing the molecular weight of high cis-1,4-polybutadiene or polyisoprene as it is polymerized in a gas phase process from 1,3-butadiene or isoprene, respectively, in the presence of a nickel, cobalt, or titanium containing catalyst, which method comprises introducing a light boiling, high volatility hydrocarbon to said polymerization.

2. A process for preparing a high cis-1,4-polybutadiene or polyisoprene which comprises polymerizing 1,3-butadiene or isoprene, respectively, in a gas phase process in the presence of a nickel, cobalt or titanium containing catalyst and in the presence of a light boiling, high volatility hydrocarbon.

3. The process of Claim 1 or 2 wherein said light boiling, high volatility hydrocarbon is selected from the group consisting of isopentane, neopentane, isohexane, butane, pentane, hexane, 3-methylpentane and 2-methylpentane.

4. The process of Claim 3 wherein said hydrocarbon is isopentane, neopentane, pentene, or isobutane.

5. The process of Claim 4 wherein said hydrocarbon is isopentane.

6. The process of any one of the preceding Claims wherein the nickel metal containing catalyst is selected from the group consisting of a nickel salt of a carboxylic acid or an organic complex compound of nickel.

7. The process of any one of the preceding Claims wherein the polymerization is conducted in the presence of an inert particulate material.

8. The process of Claim 7 wherein the hydrocarbon is introduced by coating the inert particulate material.

9. The process of any one of Claims 1 to 7 wherein the hydrocarbon is introduced with a preactivated catalyst as part of the prepoly solution.

10. The process of any one of Claims 1 to 7 wherein the hydrocarbon is introduced into the reactor directly before the addition of the catalyst.

11. The process of any one of Claims 1 to 7 wherein the hydrocarbon is introduced as one of the inert gases used to fluidize the solid.

12. The process of any one of the preceding Claims wherein the hydrocarbon is introduced into the reactor intermittently or continuously.

13. The process of any one of the preceding Claims wherein the weight ratio of hydrocarbon to monomer ranges from 0.5:100 to 10:100.

14. The process of any one of the preceding Claims wherein the polymer produced has a weight-average molecular weight ranging from 350,000 to 1,000,000.

15. A process for the preparation of cis-1,4-polybutadiene or polyisoprene by polymerization using butadiene or isoprene monomer, respectively, in the presence of a catalyst containing a metal selected from the group consisting of nickel, cobalt, titanium, and mixtures thereof in the presence of an inert particulate material, wherein said polymerization is conducted in the presence of a light boiling, high volatility hydrocarbon to increase the molecular weight of the polybutadiene or polyisoprene produced as compared to otherwise the same process except that said light boiling, high volatility hydrocarbon is not employed.

16. The process of Claim 15 wherein said hydrocarbon is selected from the group consisting of isopentane, neopentane, isohexane, butane, pentane, hexane, 3-methylpentane and 2-methylpentane.

17. The process of Claim 16 wherein said hydrocarbon is isopentane.
